# FASCICULE DE BREVET EUROPEEN

(11) **EP 2 595 857 B1**
(45) Date de publication et mention de la délivrance du brevet: **04.03.2015**
(21) Numéro de dépôt: 11741654.5
(22) Date de dépôt: 11.07.2011
(51) Int. Cl.: B62D 25/20, B60R 3/00, B60R 13/02, B60R 16/02

(54) **CHASSIS DE VEHICULE AUTOMOBILE AVEC PIECE DE FIXATION D'ELEMENTS DE CARROSSERIE ET DE CABLES ELECTRIQUES AU PLANCHER CENTRAL**
FAHRZEUGCHASSIS MIT EINEM BEFESTIGUNGSTEIL FÜR EIN KAROSSERIETEIL UND KABEL AUF DEM HAUPTBODEN
CAR FRAME WITH A BRACKET FOR FIXING A BODY PART AND WIRES TO THE MAIN FLOOR

(30) Priorité: 23.07.2010 FR 1056044
(43) Date de publication de la demande: 29.05.2013
(73) Titulaire: Renault S.A.S., 92100 Boulogne-Billancourt (FR)
(72) Inventeur: MAUDUIT, Thomas, F-78960 Voisins Le Bretonneux (FR); TABUTEAU, Pascal, F-78180 Montigny le Bretonneux (FR); CAMUS, Guillaume, F-78280 Guyancourt (FR)
(86) Numéro de dépôt international: PCT/FR2011/051645
(87) Numéro de publication internationale: WO 2012/010771

(56) Documents cités:
- DE-A1-102007 062 254
- DE-C1- 4 417 470

## Description

L'invention se situe dans le domaine des châssis pour véhicule automobile, notamment des véhicules à propulsion électrique ou hybride. Afin d'assurer une autonomie suffisante aux véhicules à propulsion électrique ou hybride, des batteries d'accumulateur doivent être embarquées. Le volume de ces batteries est sensiblement plus important que celui occupé par un réservoir d'énergie traditionnelle comme par exemple un réservoir d'essence.

Une solution consiste à exploiter un volume délimité sous le siège des passagers, en modifiant le profil du plancher de manière à isoler ce volume de l'habitacle. Le siège des passagers repose alors directement sur une zone surélevée du plancher. La hauteur du siège peut être la même que dans des véhicules de la même gamme construits pour être propulsés par un moteur thermique, ou peut être plus élevée.

Dans les véhicules automobiles à moteur thermique, la hauteur du plancher central est inférieure à la hauteur des flancs latéraux de bavolet, de sorte que la fixation du câblage, tel que par exemple des câbles électriques, et d'éléments de la carrosserie se fait directement sur les flancs latéraux.

LE document DE 102007062254A1 décrit un tel châssis selon le préambule de la revendication 1.

En surélevant le plancher central, on est amené à déplacer la fixation de ces éléments, de sorte qu'une fixation directement sur les flancs latéraux de bavolet n'est plus possible. Enfin, par souci d'étanchéité du plancher, une fixation de ces éléments directement sur le plancher n'est pas réalisable, dans la mesure où il serait nécessaire de percer directement dans le plancher central, ce qui pourrait engendrer également des risques de corrosion dudit plancher central.

L'invention a pour but de proposer un châssis pour véhicule électrique ou pour un autre véhicule nécessitant un volume de réservoir d'énergie élevé, qui permette de produire en parallèle des véhicules à propulsion électrique et des véhicules à propulsion par moteur thermique en utilisant un grand nombre de composants et de moyens de production communs.

L'invention a également pour but de proposer un tel châssis présentant une structure de fixation d'éléments de la carrosserie ainsi que du câblage, sans modification des flancs latéraux de bavolet.

Dans un mode de réalisation, l'invention concerne un châssis de véhicule automobile comprenant deux flancs latéraux de bavolet comportant une portion horizontale, un plancher central situé entre les deux flancs latéraux de bavolet et comportant une surface principale horizontale et des surfaces secondaires horizontales pour la fixation sur la portion horizontale des flancs latéraux, et un logement pour un réservoir d'énergie situé sous une surface principale horizontale du plancher central située au-dessus desdites portions horizontales des flancs latéraux de bavolet. La surface principale du plancher central présentant une différence de hauteur en raison de la présence du logement pour le réservoir d'énergie.

Le châssis de véhicule automobile comprend, de chaque côté du plancher central, entre ladite surface principale horizontale du plancher central et l'un des flancs latéraux de bavolet, au moins une pièce de fixation comprenant deux parties horizontales de fixation au plancher central, respectivement fixées à la surface principale horizontale et à une surface latérale horizontale du plancher central, une des dites parties horizontales comprenant un premier passage de réception d'une patte de fixation d'un élément de carrosserie.

L'utilisation de pièces de fixation permet d'assurer la fixation d'éléments de carrosserie et de câbles électriques sur le châssis du véhicule. Ainsi, les éléments constituant un châssis pour un véhicule automobile à propulsion thermique peuvent être utilisés sans modification substantielle pour des véhicules à propulsion électrique ou hybride dont le plancher central est rehaussé.

La pièce de fixation peut comprendre une partie verticale ou inclinée reliant les deux parties horizontales.

De manière préférentielle, la pièce de fixation comprend des moyens de rigidification.

Les pièces de fixation peuvent être réalisées en tôle métallique pliée.

De manière préférentielle, chaque pièce de fixation peut comprendre un second passage de réception d'une agrafe de fixation de câbles électriques. Ledit second passage peut être situé sur la partie verticale ou inclinée de ladite pièce de fixation.

Avantageusement, les pièces de fixation peuvent être fixées au plancher central de façon à laisser subsister un écartement entre la partie verticale ou inclinée de la pièce de fixation et une partie verticale du flanc latéral de bavolet correspondant.

De manière préférentielle, l'élément de carrosserie peut être un habillage de bas de porte.

Par « habillage de bas de porte », on entend toute pièce généralement en matière synthétique rigide permettant de recouvrir la partie basse du cadre métallique recouvrant la porte jusqu'au plancher central, afin de cacher les éventuels câbles et autre éléments. L'habillage de bas de porte est ensuite relié à un tissu de recouvrement du plancher central. L'habillage de bas de porte constitue également une marche sur laquelle un utilisateur peut prendre appui afin d'atteindre le toit du véhicule. A cet effet, cet habillage doit être suffisamment résistant au poids de l'utilisateur.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue schématique en coupe d'une partie d'un châssis selon l'invention,
- la figure 2 est une vue partielle de dessus en perspective du châssis de la figure 1, et
- la figure 3 est une vue partielle de dessus en perspective du châssis de la figure 1 illustrant la fixation de câblage.

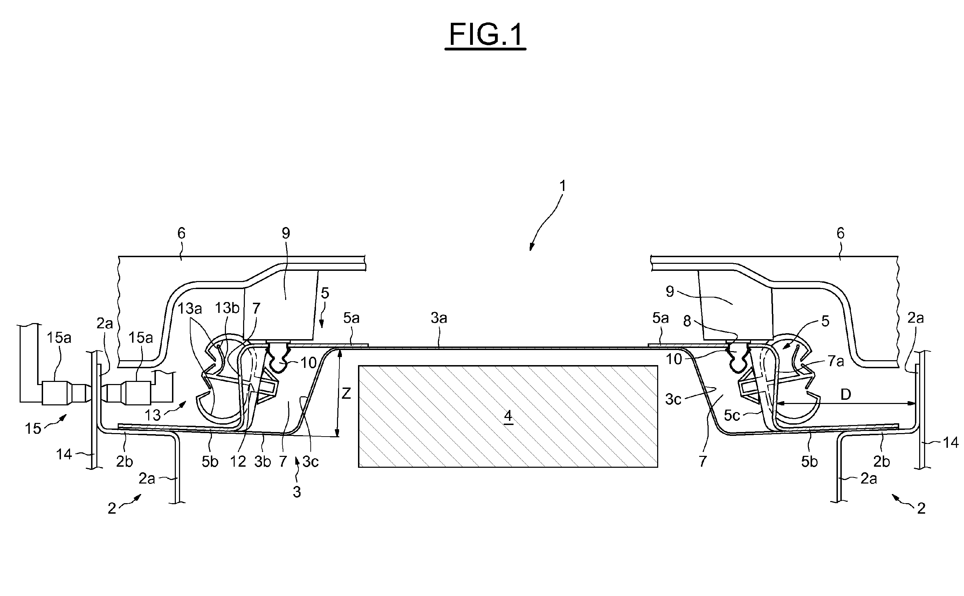

Tel qu'illustrée à la figure 1, une partie d'un châssis 1 est délimitée latéralement par deux flancs latéraux 2 de bavolet. Par « châssis », on entend tout assemblage de forme générale de type sensiblement parallélépipédique supportant le moteur, l'habitacle et la carrosserie d'un véhicule.

Un flanc latéral de bavolet, ou ridelle, désigne les parties latérales d'un véhicule automobile destinées à maintenir la charge.

Chaque flanc latéral 2 de bavolet comprend deux parties verticales 2a reliées entre elles par une portion horizontale 2b de fixation d'un plancher central 3. Les flancs latéraux 2 de bavolet peuvent être réalisés en tôles métalliques pliées ou embouties. Le plancher central 3 comprend une surface principale horizontale 3a et des surfaces secondaires horizontales 3b pour la fixation du plancher central 3 sur la portion horizontale 2b des flancs latéraux 2 de bavolet. Les surfaces horizontales 3a et 3b présentent une différence de hauteur Z engendrée par l'existence d'un logement ménagé sous le plancher central 3 pour l'implantation des batteries d'accumulateur 4. Ainsi, la surface principale horizontale 3a du plancher central 3 se trouve au-dessus des portions horizontales 2b des flancs latéraux 2 de bavolet.

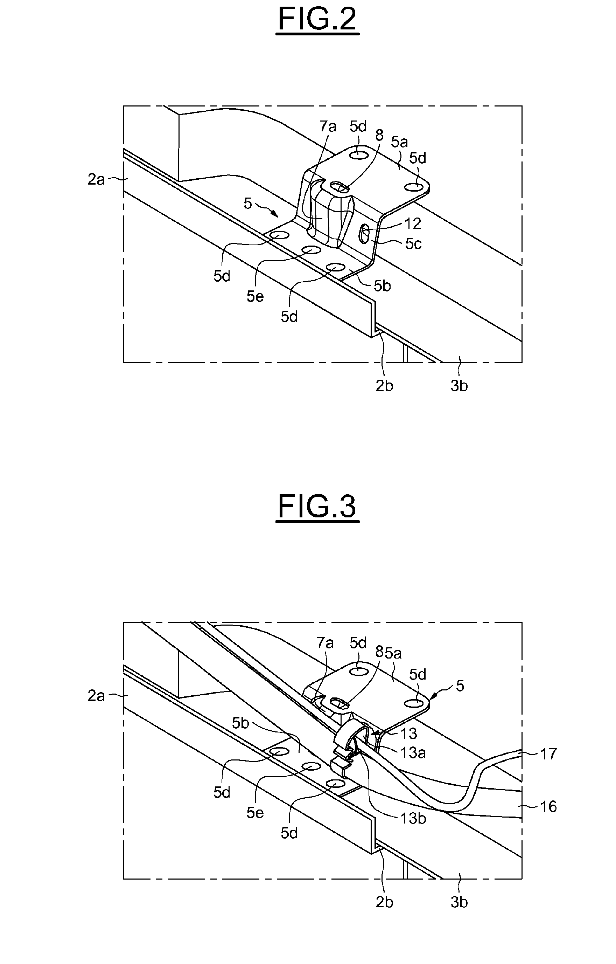

Des pièces de fixation 5 sont montées de chaque côté du plancher central 3, entre la surface principale horizontale 3a du plancher central 3 et l'un des flancs latéraux 2 de bavolet, de manière à laisser subsister un écartement D entre les pièces de fixation 5 et les portions horizontales 2b des flancs latéraux 2 de bavolet. Ces pièces de fixation 5 permettent en outre la fixation d'éléments de carrosserie, tels que, par exemple, un habillage de bas de porte 6 et de câbles électriques 16, 17 illustrés à la figure 3.

L'habillage de bas de porte 6 est une pièce, généralement en matière synthétique, permettant de recouvrir la partie basse du cadre métallique recouvrant la porte (non représenté) jusqu'au plancher central 3, afin de cacher le câblage nécessaire au véhicule. Chaque cadre de porte du véhicule comprend un habillage de bas de porte. Dans les véhicules à cinq portes, les quatre portes pour les passagers comprennent chacune un habillage de bas de porte. L'habillage de bas de porte 6 est ensuite relié à un tissu de recouvrement (non représenté) du plancher central 3. L'habillage de bas de porte 6 constitue également une marche sur laquelle l'utilisateur peut prendre appui afin d'atteindre le toit du véhicule. On notera que chaque pièce de fixation 5 pourrait servir à fixer d'autres éléments de carrosserie non situés au niveau des portes du véhicule.

Chaque pièce de fixation 5 est réalisée en tôle métallique pliée et comprend deux parties horizontales 5a, 5b reliées par une partie 5c. Dans l'exemple illustré, la partie 5c est sensiblement verticale de manière à former un angle droit avec les parties horizontales 5a, 5b. La partie 5c pourrait, en variante, être légèrement inclinée. Les parties horizontales 5a, 5b de chaque pièce de fixation 5 sont respectivement fixées à la surface principale horizontale 3a et à une surface secondaire horizontale 3b du plancher central 3. La partie 5c de chaque pièce de fixation 5 est écartée d'un flanc 3c, légèrement incliné, qui relie la surface principale horizontale 3a avec les surfaces secondaires horizontales 3b. Un espace libre 7 subsiste ainsi entre chaque pièce de fixation 5 et le flanc 3c du plancher central 3.

Dans l'exemple illustré, la partie verticale ou inclinée 5c de la pièce de fixation 5 présente une zone de rigidification 7a, de manière à renforcer la rigidité de ladite pièce de fixation 5. La zone de rigidification 7a peut être réalisée par emboutissage de la tôle vers l'extérieur dans le plan horizontal.

Telle qu'elle est illustrée, la pièce de fixation 5 comprend sur sa partie horizontale 5a un premier passage 8 de forme oblongue adapté pour recevoir un organe de fixation de l'habillage de bas de porte 6 au plancher central 3. Le premier passage 8 est avantageusement situé au dessus de la zone de rigidification 7a, afin d'éviter à la pièce de fixation 5 de se déformer sous le poids d'un utilisateur lorsque celui-ci marche sur l'habillage de bas de porte 6.

Une patte de fixation 9, intégrée à l'habillage d'un des bas de porte 6, comprend un plot 10 en matériau élastique capable de venir s'encliqueter dans le passage 8 de la pièce de fixation 5. Lors de l'insertion du plot 10 dans le premier passage 8, le plot 10 élastique se déforme, puis reprend sa forme initiale de manière à constituer une butée de retenue de la patte de fixation 9 dans le passage 8. Le plot 10 peut être réalisé en matériau synthétique semi-rigide ou en matériau métallique. Après insertion du plot 10 dans le passage 8, le plot 10 fait saillie dans l'espace libre 7.

La pièce de fixation 5 comprend en outre sur la partie verticale ou inclinée 5c un second passage 12 de forme oblongue adapté pour recevoir une agrafe de fixation 13. L'agrafe de fixation 13 peut ainsi faire saillie à l'intérieur de l'espace libre 7. L'agrafe de fixation 13 comprend deux portions annulaires semi cylindriques 13a de réception de câbles électriques et une languette 13b s'étendant à l'intérieur d'une des portions semi cylindriques 13a permettant le maintien en position de câbles électriques de faible diamètre passant à travers les passages définis par les portions semi cylindriques 13a. Les pattes et les agrafes de fixation 9 et 13 sont utilisées de manière habituelle sur les véhicules automobiles et ne seront pas davantage décrites par la suite.

Les premier et second passages 8 et 12 peuvent avoir la forme d'un trou oblong comme illustré sur les figures, afin de faciliter la mise en place des pattes de fixation 9 et 13. On notera que de tels passages 8, 12 pourraient avoir tout autre forme de manière à recevoir les pattes de fixation 9, 13.

Une fois le châssis 1 assemblé, les flancs latéraux 2 de bavolet sont soudés à la carrosserie 14 du véhicule. Grâce à la position des pièces de fixation 5 par rapport aux flancs latéraux 2 de bavolet, un écartement D est laissé entre la partie verticale ou inclinée 5c de la pièce de fixation 5 et la partie verticale 2a du flanc latéral de bavolet, de manière à permettre l'insertion d'un dispositif de soudage 15 représenté très schématiquement à la figure 1. Le dispositif de soudage 15 peut comporter, par exemple, une pince à souder et permet de souder la partie verticale 2a à la carrosserie 14 du véhicule.

La figure 2 illustre une vue partielle en perspective d'une partie du châssis 1 de la figure 1.

Comme illustré à la figure 2, la pièce de fixation 5 est fixée par des points de soudure 5d par l'intermédiaire de la partie horizontale 5a sur la surface principale horizontale 3a du plancher central 3 et par l'intermédiaire de la partie horizontale 5b sur une des surfaces secondaires horizontales 3b du plancher central 3. Afin de pré assembler et de renforcer la fixation de la partie horizontale 5b de la pièce de fixation 5 sur la surface latérale horizontale 3b du plancher central 3, une fixation supplémentaire par rivet 5e peut être envisagée.

Lorsque les pièces de fixation 5 sont fixées au plancher central 3, les agrafes de fixation 13 peuvent être montées à la partie verticale ou inclinée 5c de chaque pièce de fixation 5 par insertion dans le passage 12, tel qu'illustré aux figures 1 et 3.

Comme illustré à la figure 3, les portions semi cylindriques 13a des agrafes de fixation 13 permettent de réceptionner et de maintenir en position des câbles électriques 16 et 17. Les agrafes de fixation 13 sont réalisées en matériau synthétique, de manière s'adapter à des câbles de diamètre différents. Grâce à la languette 13b située à l'intérieur des portions semi cylindriques 13a, les câbles de faible diamètre 17 peuvent être maintenus dans les agrafes 13. Les agrafes de fixation 13 permettent la fixation de câbles électriques 16, 17 le long et de chaque côté du plancher central 3.

L'assemblage du châssis 1 consiste d'abord à fixer le plancher central 3 sur les flancs latéraux 2a de bavolet. Il convient ensuite de fixer les pièces de fixation 5 au plancher central 3, par exemple, par soudure et/ou par rivet, tel qu'illustré à la figure 2.

Lorsque les pièces de fixation 5 sont fixées au plancher central 3, les flancs latéraux 2 de bavolet peuvent être fixés à la carrosserie 14 du véhicule avec le dispositif de soudage 15. Le dispositif de soudage 15 peut être constitué par une pince de soudage à deux branches 15a qui viennent se placer de part et d'autre des deux portions de tôle 2a et 14 faisant partie respectivement du châssis 1 et de la carrosserie du véhicule. L'une des pinces 15a est située à l'extérieur de la carrosserie 14. L'autre pince 15a peut passer entre la partie verticale 2a du flanc latéral 2 de bavolet et le ou les pièces de fixation 5 situés du même côté grâce à l'écartement D qui subsiste entre les pièces de fixation 5 et la partie verticale 2a du flanc latéral 2 de bavolet. Dans une variante avantageuse du procédé d'assemblage du châssis 1, on vient fixer les pièces de fixation 5 au plancher central 3 après avoir fixé les flancs latéraux 2 de bavolet à la carrosserie 14. Ainsi, en référence à la figure 1, l'écartement D est augmenté ; il s'étend entre la partie verticale 2a du flanc latéral 2 de bavolet et le flanc 3c du plancher central 3. On dispose ainsi d'un écartement D plus important pour le passage du dispositif de soudage 15.

Grâce à l'invention qui vient d'être décrite, les pièces de fixation permettent d'assurer la fixation d'éléments de carrosserie, tels que l'habillage de bas de porte sur un plancher surélevé.

Malgré la position surélevée du plancher, il est possible de fixer l'habillage de bas de porte et le câblage de chaque côté du plancher surélevé. De plus, l'invention permet d'éviter les problèmes d'étanchéité et de corrosion du plancher central qui pourraient être dûs à des perçages pour la fixation des éléments de carrosserie et des câbles électriques directement sur le plancher central.

L'adjonction d'une pièce de fixation au niveau de chaque portière de véhicule pour la fixation d'habillages de portes ou à d'autres endroits entre le plancher central et les flancs latéraux de bavolet permet de résoudre cette difficulté tout en augmentant la rigidité de l'ensemble, grâce à une rigidification supplémentaire par la présence des pièces de fixation. La forme et la position de ces pièces de fixation permet également de conserver la fixation par soudage du plancher central aux flancs latéraux de bavolet.

De plus, les éléments constituant le châssis d'un véhicule automobile à propulsion thermique peuvent être utilisés sans modification substantielle pour des véhicules à propulsion électrique ou hybride dont le plancher central est rehaussé.

Ainsi, une même chaîne d'assemblage automatique peut être utilisée pour produire des véhicules à propulsion électrique et des véhicules à propulsion thermique.

## Revendications

1. Châssis de véhicule automobile comprenant deux flancs latéraux (2) de bavolet comportant une portion horizontale (2b), un plancher central (3) situé entre les deux flancs latéraux (2) de bavolet et comportant une surface principale horizontale (3a) et des surfaces secondaires horizontales (3b) pour la fixation sur la portion horizontale (2b) des flancs latéraux (2), lesdites surfaces horizontales (3a, 3b) présentant une différence de hauteur (Z), et un logement pour un réservoir d'énergie (4) situé sous la surface principale horizontale (3a) du plancher central (3) située au-dessus des dites portions horizontales (2b) des flancs latéraux de bavolet,
comprenant des pièces de fixation permettant d'assurer la fixation d' éléments de carrosserie et de câbles électriques de chaque côté du plancher central (3), entre ladite surface principale horizontale (3a) du plancher central (3) et l'un des flancs latéraux (2) de bavolet,
**caractérisé en ce que** au moins une des dites pièces de fixation comprend deux parties horizontales (5a, 5b) de fixation au plancher central (3), respectivement fixées à la surface principale horizontale (3a) et à une surface latérale horizontale (3b) du plancher central (3), une des dites parties horizontales (5a) comprenant un premier passage (8) de réception d'une patte de fixation (9) d'un élément de carrosserie (6).

2. Châssis selon la revendication 1, dans lequel la pièce de fixation (5) comprend une partie verticale ou inclinée (5c) reliant les deux parties horizontales (5a, 5b).

3. Châssis selon l'une des revendications 1 ou 2, dans lequel la pièce de fixation (5) comprend des moyens de rigidification (7a).

4. Châssis selon l'une des revendications 1 à 3, dans lequel les pièces de fixation (5) sont réalisées en tôle métallique.

5. Châssis selon la revendication 2, dans lequel chaque pièce de fixation (5) comprend un second passage (12) de réception d'une agrafe de fixation (13) de câbles électriques (16, 17), ledit second passage (12) étant situé sur la partie verticale ou inclinée (5c) de ladite pièce de fixation (5).

6. Châssis selon la revendication 2, dans lequel les pièces de fixation (5) sont fixées au plancher central (3) de façon à laisser subsister un écartement (D) entre la partie verticale ou inclinée (5c) de la pièce de fixation (5) et une partie verticale (2a) du flanc latéral (2) de bavolet correspondant.

7. Châssis selon l'une des revendications précédentes, selon lequel l'élément de carrosserie (6) est un habillage de bas de porte.

## Patentansprüche

1. Kraftfahrzeugchassis, das zwei seitliche Abdeckblechflanken (2) die einen horizontalen Abschnitt (2b) aufweisen, einen zentralen Boden (3) aufweist, der sich zwischen den zwei seitlichen Abdeckblechflanken (2) befindet und eine horizontale Hauptoberfläche (3a) und horizontale Nebenoberflächen (3b) zum Befestigen auf dem horizontalen Abschnitt (2b) der seitlichen Flanken (2) aufweist, wobei die horizontalen Oberflächen (3a, 3b) einen Höhenunterschied (Z) und eine Aufnahme für einen Energiespeicher (4) aufweisen, der unterhalb der horizontalen Hauptoberfläche (3a) des zentralen Bodens (3) liegt, der oberhalb der horizontalen Abschnitte (2b) der seitlichen Abdeckblechflanken liegt,
das Befestigungsteile aufweist, die es erlauben, die Befestigung von Karosserieelementen und elektrischen Kabeln auf jeder Seite des zentralen Bodens (3) zwischen der horizontalen Hauptoberfläche (3a) des zentralen Bodens (3) und einer der seitlichen Abdeckblechflanken (2) sicherzustellen,
**dadurch gekennzeichnet, dass** mindestens eines der Befestigungsteile zwei horizontale Teile (5a, 5b) zum Befestigen an dem zentralen Boden (3) aufweist, die jeweils an der horizontalen Hauptoberfläche (3a) und einer horizontalen seitlichen Oberfläche (3b) des zentralen Bodens (3) befestigt sind, wobei einer der horizontalen Teile (5a) eine erste Passage (8) zum Aufnehmen einer Befestigungspratze (9) eines Karosserieteils (6) aufweist.

2. Chassis nach Anspruch 1, bei dem das Befestigungsteil (5) einen vertikalen oder schrägen Teil (5c), der die zwei horizontalen Teile (5a, 5b) verbindet, aufweist.

3. Chassis nach einem der Ansprüche 1 oder 2, bei dem das Befestigungsteil (5) Versteifungsmittel (7a) aufweist.

4. Chassis nach einem der Ansprüche 1 bis 3, bei dem die Befestigungsteile (5) aus Metallblech hergestellt sind.

5. Chassis nach Anspruch 2, bei dem jedes Befestigungsteil (5) eine zweite Passage (12) zum Aufnehmen einer Befestigungsklammer (13) elektrischer Kabel (16, 17) aufweist, wobei die zweite Passage (12) auf dem vertikalen oder schrägen Teil (5c) des Befestigungsteils (5) liegt.

6. Chassis nach Anspruch 2, bei dem die Befestigungsteile (5) an dem zentralen Boden (3) derart befestigt sind, dass ein Abstand (D) zwischen dem vertikalen oder schrägen Teil (5c) des Befestigungsteils (5) und einem vertikalen Teil (2a) der entsprechenden seitlichen Abdeckblechflanke (2) bleibt.

7. Chassis nach einem der vorhergehenden Ansprüche, gemäß dem das Karosserieelement (6) eine Türunterseitenverkleidung ist.

## Claims

1. Motor vehicle chassis comprising two side skirt lateral flanks (2) comprising a horizontal portion (2b), a central floor (3) situated between the two side skirt lateral flanks (2) and comprising a horizontal main surface (3a) and horizontal secondary surfaces (3b) for attachment to the horizontal portion (2b) of the lateral flanks (2), said horizontal surfaces (3a, 3b) exhibiting a height difference (Z), and a housing for a reserve of energy (4) situated under the horizontal main surface (3a) of the central floor (3) situated above said horizontal portions (2b) of the side skirt lateral flanks, comprising fixing pieces allowing bodywork elements and electrical cables to be fixed on each side of the central floor (3), between said horizontal main surface (3a) of the central floor (3) and one of the side skirt lateral flanks (2), **characterized in that** at least one of said fixing pieces comprises two horizontal parts (5a, 5b) for fixing to the central floor (3), which are respectively fixed to the horizontal main surface (3a) and to a horizontal lateral surface (3b) of the central floor (3), one of said horizontal parts (5a) comprising a first passage (8) to accept a fixing lug (9) of a bodywork element (6).

2. Chassis according to Claim 1, in which the fixing piece (5) comprises a vertical or inclined part (5c) connecting the two horizontal parts (5a, 5b).

3. Chassis according to either of Claims 1 and 2, in which the fixing piece (5) comprises stiffening means (7a).

4. Chassis according to one of Claims 1 to 3, in which the fixing pieces (5) are made of sheet metal.

5. Chassis according to Claim 2, in which each fixing piece (5) comprises a second passage (12) to accept a clip (13) for securing electrical cables (16, 17), said second passage (12) being situated on the vertical or inclined part (5c) of said fixing piece (5).

6. Chassis according to Claim 2, in which the fixing pieces (5) are fixed to the central floor (3) in such a way as to leave a gap (D) between the vertical or inclined part (5c) of the fixing piece (5) and a vertical part (2a) of the corresponding side skirt lateral flank (2).

7. Chassis according to one of the preceding claims, in which the bodywork element (6) is a door sill trim.
